# EUROPÄISCHE PATENTSCHRIFT

(11) **EP 1 626 321 B1**
(45) Veröffentlichungstag und Bekanntmachung des Hinweises auf die Patenterteilung: **20.02.2008**
(21) Anmeldenummer: 05016147.0
(22) Anmeldetag: 26.07.2005
(51) Int. Cl.: G05D 16/16, F23D 14/60, F23N 1/02

(54) **Servodruckregler und Verfahren zur Ansteuerung desselben**
Pressure regulator and method of controlling the same
Régulateur de pression et son procédé de controle

(30) Priorität: 09.08.2004 DE 102004038673
(43) Veröffentlichungstag der Anmeldung: 15.02.2006
(73) Patentinhaber: Karl Dungs GmbH & Co.KG, 73660 Urbach (DE)
(72) Erfinder: Moses, Johann, 73614 Schorndorf (DE)
(74) Vertreter: Rüger, Barthelt & Abel Patentanwälte

(56) Entgegenhaltungen:
- EP-A- 1 510 756
- DE-C1- 19 740 666

## Beschreibung

Die Erfindung betrifft einen Servodruckregler, insbesondere zur Speisung eines Brenners mit variablen oder einstellbaren Gasströmen. Außerdem betrifft die Erfindung ein Verfahren zur Druckregelung eines Fluiddrucks vor einer Drosseleinrichtung mittels eines Druckreglers.

Brenner, insbesondere Gebläsebrenner, werden mit einem Gas/Luft-Gemisch versorgt, wobei die Gasmenge häufig durch eine Drosseleinrichtung einstellbar ist. Die Drosseleinrichtung kann beispielsweise durch einen Schieber oder eine Drosselklappe gebildet sein. Um mit einer solchen Drosseleinrichtung einen gewünschten Gasstrom einstellen zu können, ist es erforderlich, den vor der Drosseleinrichtung herrschenden Gasdruck konstant zu halten. Dazu werden in der Regel Druckregler genutzt. Eine solche Anordnung geht beispielsweise aus der DE 197 40 666 C1 hervor. Der dort veranschaulichte Druckregler ist unmittelbar mit einem Brenner verbunden, um diesen mit Gas zu speisen. Der Druckregler wird durch ein Pilotventil gesteuert, das auf einen Membranantrieb des Druckreglers wirkt.

Eine ähnliche Einrichtung ist aus der EP 0 644 377 B1 bekannt. Auch hier wird ein zur Speisung eines Brenners dienender Gasstrom durch einen Druckregler reguliert.

Aus der DE 197 40 666 C1 ist ein Verhältnisdruckregler zur Speisung eines Gebläsebrenners bekannt. Der Verhältnisdruckregler weist ein Regelventil mit einem Membraneantrieb auf, der durch einen Druck betätigt wird. Der Druck wird an der zum Brenner führenden Gasleitung abgenommen.

Aus der EP-A-1510756 geht ein ebensolcher Druckregler hervor, an dessen Ausgang ein Drosselelement angeordnet ist. Mit diesem ist der Gasstrom einstellbar. Eine erste Druckabnahmestelle liegt vor der Drosselstelle und eine zweite Druckabnahmestelle liegt nach der Drosselstelle. In einer Ausführungsform (Fig. 6) ist eine Veränderung der Drosselung durch Verstellung eines Drosselglieds möglich. Bei schwacher Drosselung wird die von der Drosselstelle liegende Druckabnahmestelle aktiviert. Bei starker Drosselung wird die hinter der Drosselstelle liegende Druckabnahmestelle aktiviert.

Bei Volllast, d.h. bei vollständig offener Drossel, kann es dazu kommen, dass der Druckregler nicht mehr ausreichend regelt. Dies kann mit dem Druckregler vorgelagerten Strömungswiderständen oder auch mit einem von dem Brenner herrührenden Rückstau zusammenhängen.

Davon ausgehend ist es Aufgabe der Erfindung, einen Servodruckregler mit erweitertem Arbeitsbereich zu schaffen. Ebenso ist es Aufgabe der Erfindung, ein entsprechendes Verfahren zu schaffen.

Diese Aufgaben werden mit dem Servodruckregler nach Anspruch 1 sowie dem Verfahren nach Anspruch 11 gelöst:

Der erfindungsgemäße Servodruckregler weist eine Drosseleinrichtung sowie zwei Druckabnahmestellen auf, von denen eine vor und die andere an oder nach der Drosseleinrichtung angeordnet ist. Von den Druckabnahmestellen führen Kanäle zu einer Umschalteinrichtung, die eine zu einem Pilotventil führende Steuerleitung mehr oder weniger mit der einen und/oder der anderen Druckabnahmestelle verbindet. Dadurch kann erreicht werden, dass der Druckregler auch bei Volllast, d.h. bei ganz geöffneter Drossel, aktiv bleibt. Ein vor dem Druckregler stattfindender Druckabfall kann ebenso kompensiert werden wie ein sich durch den Widerstand von Gasausströmdüsen des Brenners oder einer Vormischeinrichtung ergebender Rückstau. Erreicht wird dies z.B. dadurch, dass bei Volllast, d.h. bei ganz geöffneter Drossel ein hinter der Drossel entstehender Unterdruck (Bernoullie-Effekt) zu dem Pilotventil geleitet wird. Dies kann als Störgrößenaufschaltung angesehen werden, die bei Volllast aktiviert wird. Selbst wenn kein Bernoullie-Effekt genutzt wird bewirkt der Abgriff hinter der Drossel bei Volllast, dass der Restströmungswiderstand der offenen Drossel unwirksam gemacht wird, weil der Druck hinter der Drossel auf den Sollwert konstant ausgeregelt wird. Dies eröffnet Freiheitsgrade hinsichtlich der Gestaltung der Drossel. Im offenen Zustand muss der Strömungswiderstand nicht Null sein, was ohnehin schwer zu erreichen wäre.

Die Drosseleinrichtung kann beispielsweise ein Drosselschieber, eine Drosselklappe, eine Drosselwalze oder dergleichen sein. Wenn die Drosseleinrichtung in voll geöffnetem Zustand einen Restdurchflusswiderstand aufweist, kann dieser kompensiert werden, indem der Druck vor der Drosseleinrichtung etwas erhöht, d.h. der Druckregler etwas weiter geöffnet wird. Auch dies kann durch die Störgrößenaufschaltung bewirkt werden. Damit verbessert sich nicht nur die Reglerwirkung des Druckreglers bei Volllast sondern es kann außerdem der Gasdurchfluss bei Volllast erhöht werden. Dies eröffnet die Möglichkeit, mit relativ kleinen Druckreglern hohe Gasdurchflüsse und somit hohe Brennerleistungen zu ermöglichen. Die Ermöglichung hoher Leistungen mit niedrigen Ventilquerschnitten ermöglicht die Senkung von Installationskosten und die Vereinfachung von Anlagen.

Die Drosseleinrichtung ist vorzugweise mit der Umschalteinrichtung wirkungsmäßig so verbunden, dass die Umschalteinrichtung automatisch die Störgrößenaufschaltung erst dann vornimmt, wenn die Drosseleinrichtung in Richtung Volllast verstellt wird. Unter Volllast wird beispielsweise eine ganz geöffnete Drossel oder auch eine Drossel verstanden, die zu mehr als 90 % offen ist.

Die Umschalteinrichtung kann in einen Drosselschieber oder ein sonstiges Drosselorgan integriert sein. Damit ergeben sich besonders einfache und übersichtliche Konstruktionen.

Weitere Einzelheiten vorteilhafter Ausführungsformen der Erfindung sind Gegenstand der Zeichnung, der Beschreibung oder von Ansprüchen.

In der Zeichnung ist ein Ausführungsbeispiel der Erfindung veranschaulicht. Es zeigen:
- Figur 1: einen Gebläsebrenner mit vorgeschaltetem Verhältnisregler sowie weiteren Gasventilen zur Steuerung des Betriebs und
- Figur 2: den Verhältnisregler nach Figur 1 in einer längs geschnittenen schematisierten Darstellung.

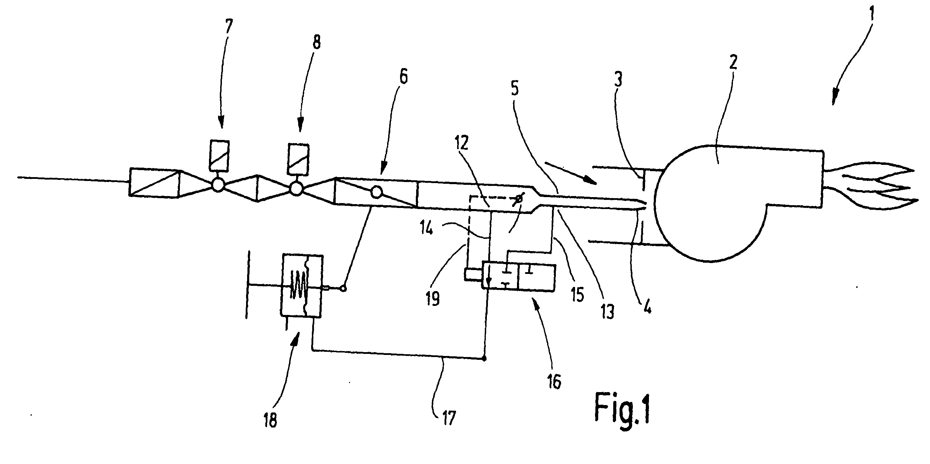

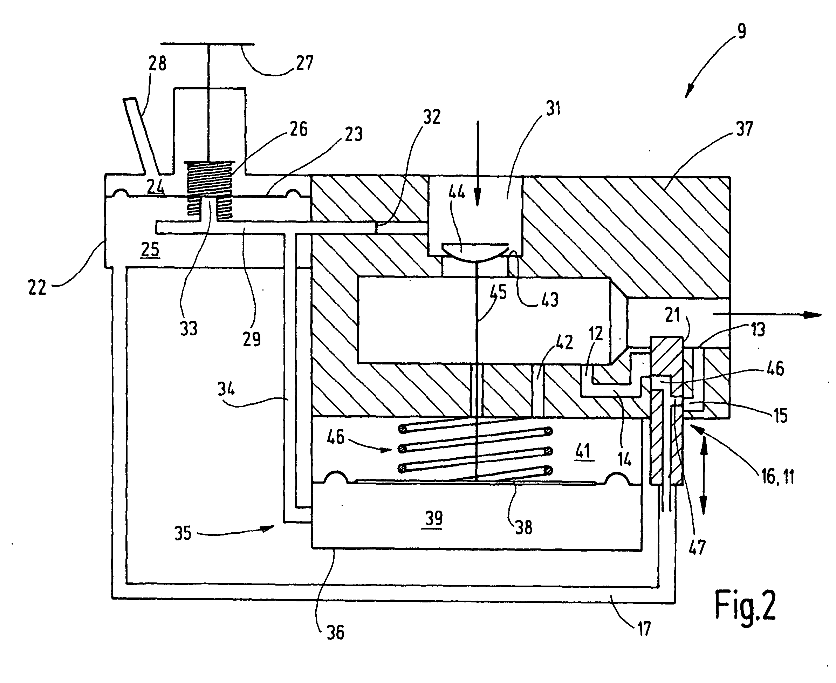

In Figur 1 ist ein Gebläsebrenner 1 schematisiert veranschaulicht, dem ein Gebläse 2 vorgeschaltet ist. Das Gebläse 2 weist eingangsseitig eine Luftdüse 3 auf, in oder an der eine Gasdüse 4 angeordnet ist. Die Gasdüse 4 wird von einer Gasleitung 5 gespeist, der ein Verhältnisregler 6 sowie Steuerventile 7, 8 vorgeschaltet sind. Letztere dienen dazu, das Gas freizugeben und zu sperren. Der Verhältnisregler 6 ist als Druckregler 9 ausgebildet, der in Figur 2 gesondert veranschaulicht ist. Er enthält eine Drosseleinrichtung 11 oder ist mit einer solchen verbunden. Die Drosseleinrichtung 11 ist stromabwärts zu dem Druckregler 9 angeordnet und beeinflusst den zu der Gasdüse 4 geleiteten Gasstrom. Während der Verhältnisregler 6 den Gasdruck vor der Drosseleinrichtung 11 im Verhältnis zu dem Umgebungsluftdruck konstant ausregelt, dient die Drosseleinrichtung 11 dazu, den sich ergebenden Gasstrom einzustellen.

Sowohl vor als auch hinter der Drosseleinrichtung sind Druckabnahmestellen 12, 13 vorgesehen. Die erste Druckabnahmestelle 12 ist zwischen dem Verhältnisregler 6 und der Drosseleinrichtung 11 angeordnet. Die zweite Druckabnahmestelle 13 ist zwischen der Drosseleinrichtung 11 und der Gasdüse 4 angeordnet. Von den Druckabnahmestellen 12, 13 zweigen Kanäle 14, 15 ab, die zu einer Umschalteinrichtung 16 führen. An diese ist eine Steuerleitung 17 angeschlossen, die zu einem Pilotventil 18 führt. Die Umschalteinrichtung 16 und die Drosseleinrichtung 11 sind über eine mechanische Wirkverbindung 19 miteinander verbunden. Beispielsweise wird die Wirkverbindung 18 durch eine drehbare Welle, eine Steuerstange oder dergleichen gebildet. Sie kann auch dadurch gebildet sein, dass die Drosseleinrichtung 11 und die Umschalteinrichtung 16 baulich miteinander vereinigt sind. Des Weiteren kann sowohl die Druckabnahmestelle 12 als auch die Druckabnahmestelle 13 an einem Drosselglied, wie beispielsweise einem aus Figur 2 ersichtlichen Steuerschieber 21 angeordnet werden. In dem Ausführungsbeispiel nach Figur 2 wird jedoch davon kein Gebrauch gemacht.

Das Pilotventil 18 geht, wie der Druckregler 9, gesondert aus Figur 2 hervor. Es weist ein Gehäuse 22 auf, das durch eine Membran 23 in zwei Arbeitskammern 24, 25 unterteilt ist. Während die Arbeitskammer 24 mit der Umgebungsluft verbunden ist, ist die Arbeitskammer 25 über die Steuerleitung 17 mit der Umschalteinrichtung 16 verbunden. Eine Stellfeder 26 belastet die Membran 23 in einer vorgegebenen Richtung. Eine Stellschraube 27 dient dabei zur Einstellung der Vorspannkraft der Stellfeder. Die Arbeitskammer 24 ist über eine Leitung 28 oder eine entsprechende Öffnung mit der Umgebung verbunden.

Die Membran 23 wirkt zugleich als Ventilglied zum Freigeben oder zum Verschluss des Auslasses einer Vordruckleitung 29, die vor dem Druckregler 9 von einem zuführenden Fluidkanal 31 abzweigt. In der Vordruckleitung 29 ist in der Regel eine Drossel 32 anzuordnen. Die Vordruckleitung 29 weist in der Arbeitskammer 25 eine Auslassöffnung 33 auf, die von der Membran 23 mehr oder weniger freigegeben wird. Außerdem verzweigt sie sich und führt als Leitung 34 zu einem Fluidantrieb 35 zur Betätigung des Druckreglers 9.

Der Fluidantrieb 35 weist ein Antriebsgehäuse 36 auf, das in Bezug auf ein Ventilgehäuse 37 ortsfest angeordnet ist. Das Antriebsgehäuse 36 ist durch eine Antriebsmembran 38 zweigeteilt. Eine erste Kammer 39 ist mit der Leitung 34 verbunden. Eine gegenüber liegende zweite Kammer 41 ist über einen in dem Ventilgehäuse 37 ausgebildeten Kanal 42 mit dem Fluidkanal 31 verbunden, der durch das Ventilgehäuse 37 führt. Im Laufe des Fluidkanals 31 ist ein in dem Ventilgehäuse 37 ausgebildeter Ventilsitz 43 angeordnet, dem ein Ventilverschlussglied 44 zugeordnet ist. Dieses ist über eine Ventilspindel 45 mit der Antriebsmembran 38 verbunden, wobei das Ventilverschlussglied 44 stromaufwärts des Ventilsitzes 43 sitzt. Es wird in Offenstellung überführt, wenn die Antriebsmembran 38 in Folge Überdrucks in der Kammer 39 im Sinne einer Vergrößerung des Volumens in der Kammer 39 bewegt wird. In Gegenrichtung wirkt eine Druckfeder 46, die in der Kammer 41 angeordnet ist und das Ventilverschlussglied 4 in Schließrichtung vorspannt.

Wie aus Figur 2 weiter ersichtlich, ist die Druckabnahmestelle 12 an einer Stelle des Fluidkanals 31 angeordnet, der einen relativ großen Strömungsquerschnitt aufweist. An der Stelle an der die zweite Druckabnahmestelle 13 angeordnet ist, weist der Fluidkanal 31 einen vergleichsweise kleineren Strömungsquerschnitt auf. Die erste Druckabnahmestelle 12 liegt zwischen dem Ventilverschlussglied 44 und dem Steuerschieber 21. Die zweite Druckabnahmestelle 13 liegt hinter dem Steuerschieber 21. Die Umschalteinrichtung 16 ist von dem Steuerschieber 21 gebildet. Der Steuerschieber 21 ist in einer sich quer zu dem Fluidkanal 31 erstreckenden stromabwärts des Ventilsitzes 43 angeordneten Öffnung angeordnet. Er ist in dieser Öffnung verschiebbar gelagert, so dass er den Fluidkanal 31 mehr oder weniger freigeben kann. Die Kanäle 14, 15 führen von den Druckabnahmestellen 12, 13 zu z.B. gegenüber liegenden Seiten der Öffnung, in der der Steuerschieber 21 sitzt. In den Steuerschieber 21 ist ein Kanal integriert, dessen einer Zweig 46 an einer Seite des Steuerschiebers 21 mündet. Ein anderer Zweig 47 mündet an der gegenüber liegenden Seite. Die Zweige 46, 47 sind dabei so angeordnet, dass sie mit den entsprechenden Kanälen 14, 15 in unterschiedlichen Längspositionen bzw. Verschiebepositionen des Steuerschiebers 21 kommunizieren. Ist der Steuerschieber so weit in das Ventilgehäuse 37 eingeschoben, dass er den Fluidkanal 31 schließt oder fast schließt oder zum Teil schließt, kommuniziert der Zweig 46 mit dem Kanal 14. Dazu können der Kanal 14 und der Zweig 46 bezogen auf die axiale Verschiebungsrichtung des Steuerschiebers 21 eine entsprechende Ausdehnung aufweisen. Ist der Steuerschieber 21 jedoch so weit aus dem Ventilgehäuse 37 heraus bewegt, dass er den Fluidkanal 31 fast freigibt oder ganz freigibt, kommuniziert der Zweig 47 mit dem Kanal 15. Die Fluidverbindung zwischen dem Kanal 14 und dem Zweig 46 kann fortbestehen oder aufgehoben d.h. gesperrt sein.

Die insoweit beschriebene Einrichtung arbeitet wie folgt:

Bei geschlossenen Steuerventilen 7, 8 ruht die Anordnung - es gelangt kein Gas zu der Gasdüse 4.

Sind die Steuerventile 7, 8 offen und steht der Steuerschieber 21 beispielsweise auf einer mittleren Position, um ein bestimmtes Gas/Luft-Verhältnis einzustellen, regelt der Verhältnisregler 6 einen bezogen auf den Umgebungsluftdruck konstanten Druck vor der Drosseleinrichtung 11 ein. Auf der Membran 23 lasten die Kraft der Feder 26 und der Umgebungsluftdruck. Damit ist die Öffnung 33 zunächst weitgehend geschlossen. Durch die Drossel 32 hindurch kann der anstehende Gasdruck über die Leitung 34 in die Kammer 39 gelangen und bewirkt somit eine gewisse Öffnung des Druckreglers 9, d.h. ein Abheben des Ventilverschlussglieds 44 von dem Ventilsitz 43. Dadurch steigt der Druck zwischen dem Ventilverschlussglied 44 und dem Steuerschieber 21 so lange an bis über die Druckabnahmestelle 12 und die Umschalteinrichtung 16 ein ausreichender Gegendruck abgenommen wird, der über die Steuerleitung 17 in die Arbeitskammer 25 gelangt. Mit zunehmendem Druck in der Arbeitskammer 25 wird die Membran 23 von der Öffnung 33 weg bewegt, so dass diese graduell mehr und mehr freigegeben wird. Der sich dadurch einstellende Druckabfall in der Leitung 34 stabilisiert schließlich das Druckverhältnis zwischen den Kammern 39 und 41 und somit die Position des Ventilverschlussglieds 44. Änderungen des Eingangsdrucks oder des Ausgangsdrucks des Druckreglers 9 werden ausgeregelt, indem das Ventilverschlussglied 44 mehr oder weniger von dem Ventilsitz 43 weg bewegt wird.

In diesem Arbeitsgebiet kann der Drosselschieber 21 bewegt werden, um einen größeren oder geringeren Gasstrom freizugeben und um somit beispielsweise eine Anpassung an größere oder kleinere Gebläsebrenner oder an sonstige Gegebenheiten vorzunehmen. In Grenzen kann damit auch eine Leistungsbeeinflussung vorgenommen werden.

Ein etwas anderes Arbeitsspiel ergibt sich bei vollständig oder nahezu vollständig geöffneter Drosseleinrichtung 11, d.h. wenn der Steuerschieber 21 den Fluidkanal 31 fast ganz freigibt. In diesem Fall kann von dem angeschlossenen Brenner ein Gasrückstau erfolgen, der zu einem Druckanstieg an der Steuerleitung 17 und/oder dem Kanal 42 führen würde, was beides zu einer Drosselung des Gasstroms durch den Druckregler 9 führt. Außerdem kann ein hoher Gasstrom den Druck vor dem Druckregler 9 zusammenbrechen lassen, was ebenfalls zu einer Schließtendenz des Druckreglers 9 führt. Dem wird zuvorgekommen, indem nun die zweite Druckabnahmestelle 13 aktiviert ist. An dieser Druckabnahmestelle ist in Folge der hohen Strömungsgeschwindigkeit ein verminderter Druck zu messen, so dass die Strömung eine Verminderung des Drucks in der Arbeitskammer 25 bewirkt. Damit wird die Öffnung 33 tendenziell geschlossen, was wiederum dem Druckregler 9 eine Öffnungstendenz verleiht. Es kann somit durch das vollständige Öffnen des Steuerschiebers 21, der zugleich ein Umschalten von der Druckabnahmestelle 12 auf die Druckabnahmestelle 13 bewirkt, der Druckregler 9 ganz geöffnet und somit der Strömungswiderstand der gesamten Anordnung auf ein Minimum reduziert werden. Damit lassen sich mit niedrigen Querschnitten hohe Gasdurchflüsse erzielen. Außerdem bleibt der Druckregler 9 auch bei hohem Gegendruck von dem Brenner oder bei Zusammenbrechen des Eingangsdrucks vor dem Druckregler 9, d.h. schlicht bei verminderter Druckdifferenz über dem Druckregler aktiv.

Ein Servodruckregler, insbesondere zur Speisung eines Brenners mit variablen Gasströmen, weist ein Druckreglerventil 48 auf, das von einem Ventilverschlussglied 44 und einem Ventilsitz 43 gebildet ist. Zur Betätigung des Druckreglerventils 48 dient ein Fluidantrieb 35, dessen Arbeitsdruck von einem Pilotventil 18 reguliert wird. Dieses greift seinen Steuerdruck vor oder nach einer Drosseleinrichtung 11 ab und zwar je nach dem, ob die Drosseleinrichtung auf Teillast oder auf Volllast steht. Bei Volllast wird der Steuerdruck vorzugsweise an einer zweiten, hinter der Drosseleinrichtung 11 liegenden Druckabnahmestelle 13 abgenommen. Bei Teillast wird der Steuerdruck vorzugsweise vor der Drosseleinrichtung 11 abgenommen, um den Gasdruck vor der Drosseleinrichtung 11 konstant zu halten. Mit dieser Maßnahme lassen sich bei Volllast erhöhte Gasdurchflüsse erreichen. Außerdem lässt sich erreichen, dass der Druckregler bei Druckabfall in Folge Volllast aktiv bleibt.

## Patentansprüche

1. Servodruckregler, insbesondere zur Speisung eines Brenners mit variablen Gasströmen,
mit einem Druckreglerventil (48), das von einem Fluidantrieb (35) betätigt ist,
mit einem Pilotventil (18) zur Steuerung des Fluidantriebs (35),
mit einer Drosseleinrichtung (11), die bezogen auf die Fluidströmungsrichtung nach dem Druckreglerventil (48) angeordnet ist,
mit einer Steuerleitung (17), die über eine Umschalteinrichtung (16) alternativ an eine erste Druckabnahmestelle (12, 13), die vor der Drosseleinrichtung (11) liegt, und an eine zweite Druckabnahmestelle (13) angeschlossen ist, die nach der Drosseleinrichtung (11) liegt,
wobei die Umschalteinrichtung (16) die erste Druckabnahmestelle (12) mit der Steuerleitung (17) verbindet, wenn sich die Drosseleinrichtung (11) in Teillastposition befindet, und wobei
die Umschalteinrichtung (16) die zweite Druckabnahmestelle (13) mit der Steuerleitung (17) verbindet, wenn sich die Drosseleinrichtung (11) in Volllastposition befindet.

2. Servodruckregler nach Anspruch 1, **dadurch gekennzeichnet, dass** die Drosseleinrichtung (11) in wenigstens eine Volllastposition und in wenigstens eine Teillastposition überführbar ist.

3. Servodruckregler nach Anspruch 1, **dadurch gekennzeichnet, dass** die Umschalteinrichtung (16) mit der Drosseleinrichtung (11) verbunden ist.

4. Servodruckregler nach Anspruch 1, **dadurch gekennzeichnet, dass** die Umschalteinrichtung (16) Teil der Drosseleinrichtung (11) ist.

5. Servodruckregler nach Anspruch 1, **dadurch gekennzeichnet, dass** die Drosseleinrichtung (11) ein Steuerschieber (21) ist.

6. Servodruckregler nach Anspruch 7, **dadurch gekennzeichnet, dass** der Steuerschieber (21) wenigstens einen Steuerkanal (46, 47) enthält, der über Schieberöffnungen mit den Druckabnahmestellen (12, 13) verbindbar ist.

7. Servodruckregler nach Anspruch 1, **dadurch gekennzeichnet, dass** die Druckabnahmestellen (12, 13) an Stellen des Fluidkanals (31) mit unterschiedlichem Strömungsquerschnitt angeordnet sind.

8. Servodruckregler nach Anspruch 9, **dadurch gekennzeichnet, dass** die erste Druckabnahmestelle (12) an einer Stelle des Fluidkanals (31) mit großem Strömungsquerschnitt und die zweite Druckabnahmestelle (13) an einer Stelle mit geringerem Strömungsquerschnitt angeordnet ist.

9. Verfahren zur Druckreglung eines Fluiddrucks vor einer Drosseleinrichtung (11) mittels eines Druckreglers (9), wobei bei dem Verfahren vor der Drosseleinrichtung (11) ein Steuerdruck abgenommen und dem Druckregler (9) als Ist-Wert zugeführt wird und bei dem hinter der Drosseleinrichtung (11) mit einer Steuerleitung (17) ein Druck abgenommen wird, der dem Druckregler (9) als Störgrößensignal aufgeschaltet wird, wobei die Steuerleitung über eine Umschalteinrichtung (16) alternativ an eine erste Druckabnahmestelle (12, 13), die vor der Drosseleinrichtung (11) liegt, und an eine zweite Druckabnahmestelle (13) angeschlossen wird, die nach der Drosseleinrichtung (11) liegt, wobei
die Umschalteinrichtung (16) die erste Druckabnahmestelle (12) mit der Steuerleitung (17) verbindet, wenn sich die Drosseleinrichtung (11) in Teillastposition befindet, und wobei
die Umschalteinrichtung (16) die zweite Druckabnahmestelle (13) mit der Steuerleitung (17) verbindet, wenn sich die Drosseleinrichtung (11) in Volllastposition befindet.

10. Verfahren nach Anspruch 9, **dadurch gekennzeichnet, dass** die Störgrößenaufschaltung bei Volllast aktiviert und sonst deaktiviert wird.

## Claims

1. Ancillary pressure regulator, in particular for supplying a burner with variable gas flows;
with a pressure regulating valve (48), which is operated by a fluid drive (35), with a pilot valve (18) for controlling the fluid drive (35),
with a throttle means (11), which is arranged after the pressure regulating valve (48) with respect to the direction of fluid flow,
with a control conduit (17), which is connected via a switchover means (16) alternatively to a first pressure measurement point (12, 13) located in front of the throttle means (11) and to a second pressure measurement point (13) located after the throttle means (11),
wherein the switchover means (16) connects the first pressure measurement point (12) to the control conduit (17) when the throttle means (11) is located in partial load position, and wherein
the switchover means (16) connects the second pressure measurement point (13) to the control conduit (17) when the throttle means (11) is located in full load position.

2. Ancillary pressure regulator according to claim 1, **characterised in that** the throttle means (11) can be moved into at least one full load position and into at least one partial load position.

3. Ancillary pressure regulator according to claim 1, **characterised in that** the switchover means (16) is connected to the throttle means (11).

4. Ancillary pressure regulator according to claim 1, **characterised in that** the switchover means (16) is part of the throttle means (11).

5. Ancillary pressure regulator according to claim 1, **characterised in that** the throttle means (11) is a slide valve (21).

6. Ancillary pressure regulator according to claim 7, **characterised in that** the slide valve (21) includes at least one control channel (46, 47), which can be connected to the pressure measurement points (12, 13) via slide openings.

7. Ancillary pressure regulator according to claim 1, **characterised in that** the pressure measurement points (12, 13) are arranged at locations of the fluid conduit (31) with a different flow cross-section.

8. Ancillary pressure regulator according to claim 9?, **characterised in that** the first pressure measurement point (12) is arranged at a location of the fluid conduit (31) with a large flow cross-section and the second pressure measurement point (13) is arranged at a location with a smaller flow cross-section.

9. Method for regulating a fluid pressure in front of a throttle means (11) by means of a pressure regulator (9), wherein in the method in front of the throttle means (11) a control pressure is measured and fed to the pressure regulator (9) as an actual value, and in which after the throttle means (11) with a control conduit (17) a pressure is measured and is modulated to the pressure regulator (9) as disturbance variable signal, wherein the control conduit is connected via a switchover means (16) alternatively to a first pressure measurement point (12, 13) located in front of the throttle means (11) and to a second pressure measurement point (13) located after the throttle means (11), wherein
the switchover means (16) connects the first pressure measurement point (12) to the control conduit (17) when the throttle means (11) is located in partial load position, and wherein
the switchover means (16) connects the second pressure measurement point (13) to the control conduit (17) when the throttle means (11) is located in full load position.

10. Method according to claim 9, **characterised in that** the disturbance variable modulation is activated in the case of full load and is otherwise deactivated.

## Revendications

1. Servorégulateur de pression, notamment pour alimenter un brûleur par des courants gazeux variables, qui comporte :
- une soupape de régulateur de pression (48), qui est actionnée par un entraînement fluide (35),
- une soupape pilote (18) pour commander l'entraînement fluide (35),
- un dispositif d'étranglement (11) qui est disposé en aval de la soupape de régulateur de pression (48) par rapport au sens d'écoulement de fluide,
- une conduite de commande (17) qui, par un dispositif de commutation (16) est reliée en alternance à un premier point de prise de pression (12, 13) disposé en amont du dispositif d'étranglement (11) et à un second point de prise de pression (13) disposé en aval du dispositif d'étranglement (11),
étant précisé que
le dispositif de commutation (16) relie le premier point de prise de pression (12) à la conduite de commande (17) quand le dispositif d'étranglement (11) se trouve être en position de charge partielle, tandis qu'il relie le second point de pression (13) à la conduite de commande (17) quand le dispositif d'étranglement (11) se trouve être en position de pleine charge.

2. Servorégulateur de pression selon la revendication 1, **caractérisé en ce que** le dispositif d'étranglement (11) peut être amené à au moins une position de pleine charge et à au moins une position de charge partielle.

3. Servorégulateur de pression selon la revendication 1, **caractérisé en ce que** le dispositif de commutation (15) est relié au dispositif d'étranglement (11).

4. Servorégulateur de pression selon la revendication 1, **caractérisé en ce que** le dispositif de commutation (15) est une partie du dispositif d'étranglement (11).

5. Servorégulateur de pression selon la revendication 1, **caractérisé en ce que** le dispositif d'étranglement (11) est un tiroir de commande (21).

6. Servorégulateur de pression selon la revendication 7, **caractérisé en ce que** le tiroir de commande (21) contient au moins un canal de commande (46, 47) qui peut être relié par des ouvertures du tiroir aux points de prise de pression (12, 13).

7. Servorégulateur de pression selon la revendication 1, **caractérisé en ce que** les points de prise de pression (12, 13) sont disposés à des endroits du canal de fluide (31) où ce canal présente des sections d'écoulement différentes.

8. Servorégulateur de pression selon la revendication 7, **caractérisé en ce que** le premier point de prise de pression (12) se trouve à un endroit du canal de fluide (31) où ce canal présente une grande section et le second point de prise de pression (13) se trouve à un endroit où le canal présente une section plus faible.

9. Procédé pour réguler la pression d'un fluide en amont d'un dispositif d'étranglement (11) au moyen d'un régulateur de pression (9), selon lequel en amont du dispositif d'étranglement (11) est saisie une pression de commande qui est adressée au régulateur de pression (9) en tant que valeur réelle, tandis qu'en aval du dispositif d'étranglement (11) est saisie par une conduite de commande (17) une pression qui est entrée dans le régulateur de pression (9) en tant que signal de grandeur de perturbation, la conduite de commande étant reliée en alternance à un premier point de prise de pression (12, 13) disposé en amont du dispositif d'étranglement (11) et à un second point de prise de pression (13) disposé en aval du dispositif d'étranglement (11),
étant précisé que
le dispositif de commutation (16) relie le premier point de prise de pression (12) à la conduite de commande (17) quand le dispositif d'étranglement (11) se trouve en position de charge partielle, tandis qu'il relie le second point de pression (13) à la conduite de commande (17) quand le dispositif d'étranglement (11) se trouve dans la position de pleine charge.

10. Procédé selon la revendication 9, **caractérisé en ce que** l'entrée en ligne de la perturbation est activée à pleine charge, autrement elle est désactivée.
